# EUROPÄISCHE PATENTANMELDUNG

(11) **EP 2 857 275 A2**
(43) Veröffentlichungstag der Anmeldung: **08.04.2015**
(21) Anmeldenummer: 14001793.0
(22) Anmeldetag: 21.05.2014
(51) Int. Cl.: B60W 50/14, B60R 1/00

(54) **Verfahren zum Betrieb eines Fahrerassistenzsystems zum Rangieren und/oder Parken**

(30) Priorität: 14.06.2013 DE 102013010010
(71) Anmelder: AUDI AG, 85045 Ingolstadt (DE)
(72) Erfinder: Schlittenbauer, Michael, 85055 Ingolstadt (DE); Roehder, Martin, 85049 Ingolstadt (DE); Dalbah, Yosef, 85049 Ingolstadt (DE)
(74) Vertreter: Thielmann, Frank

(57) **Zusammenfassung**

Verfahren zum Betrieb eines Fahrerassistenzsystems (2) zur Unterstützung eines Fahrers beim Rangieren und/oder Parken mit einem Kraftfahrzeug (1), wobei das Fahrerassistenzsystem (2) unter Verwendung von Sensordaten wenigstens eines Umgebungssensors (3) wenigstens eine dem Fahrer auf einer Anzeigevorrichtung (6) anzuzeigende, wenigstens einen Teil des Kraftfahrzeugs (1) in Relation zu umgebenden Objekten (10) zeigende Darstellung (8, 12) erzeugt und darstellt, wobei als Umgebungssensor (3) wenigstens ein dreidimensionale Sensordaten aufnehmender Umgebungssensor (3) verwendet wird, aus den Sensordaten ein wenigstens einen Teil des Kraftfahrzeugs (1) und der Umgebung des Kraftfahrzeugs (1) beschreibendes dreidimensionales Umgebungsmodell ermittelt wird und die Darstellung (8, 12) unter Verwendung des Umgebungsmodells erzeugt wird.

## Beschreibung

Die Erfindung betrifft ein Verfahren zum Betrieb eines Fahrerassistenzsystems zur Unterstützung eines Fahrers beim Rangieren und/oder Parken mit einem Kraftfahrzeug, wobei das Fahrerassistenzsystem unter Verwendung von Sensordaten wenigstens eines Umgebungssensors wenigstens eine dem Fahrer auf einer Anzeigevorrichtung anzuzeigende, wenigstens einen Teil des Kraftfahrzeugs in Relation zu umgebenden Objekten zeigende Darstellung erzeugt und darstellt. Daneben betrifft die Erfindung ein Kraftfahrzeug.

Fahrerassistenzsysteme für Kraftfahrzeuge, die den Fahrer beim Parken und/oder Rangieren unterstützen, sind im Stand der Technik bereits bekannt und werden beispielsweise als Parkassistenzsysteme bezeichnet. Derartige Fahrerassistenzsysteme arbeiten üblicherweise mit Ultraschallsensoren als Umfeldsensoren, die die Umgebung, konkret Abstände zu Objekten, grob vermessen. Die Sensordaten der Ultraschallsensoren werden durch eine geeignete Recheneinrichtung in eine Darstellung umgewandelt, beispielsweise eine Aufsicht auf das Kraftfahrzeug, die anzeigt, wo sich um das Kraftfahrzeug herum in welchem Abstand ein Hindernis befindet. Gängig sind dabei insbesondere Balkendarstellungen, bei denen verschiedene Entfernungsbereiche in einem Sektor der Umgebung des Kraftfahrzeugs durch einen Balken symbolisiert sind, der beispielsweise ausgefüllt und/oder hervorgehoben, beispielsweise rot eingefärbt, wird, wenn der Ultraschallsensor in diesem Entfernungsbereich ein Objekt detektiert hat.

Derartige Parkassistenzsysteme geben jedoch kein detailliertes Bild der Umgebung für einen Fahrer des Kraftfahrzeugs ab. Insbesondere werden durch Ultraschallsensoren häufig auch Abstände zu Objekten wahrgenommen, die durch das Kraftfahrzeug beispielsweise unterfahren oder überfahren werden können. Diese können über herkömmliche Fahrerassistenzsysteme gegebenenfalls nicht korrekt beurteilt werden.

Der Erfindung liegt daher die Aufgabe zugrunde, ein Verfahren zum Betrieb eines Fahrerassistenzsystems anzugeben, welches dem Fahrer mehr Informationen über die Umgebung zugänglich macht und somit ein verbessertes Rangieren und/oder Parken in der Gegenwart von Objekten erlaubt.

Zur Lösung dieser Aufgabe ist bei einem Verfahren der eingangs genannten Art erfindungsgemäß vorgesehen, dass als Umgebungssensor wenigstens ein dreidimensionale Sensordaten aufnehmender Umgebungssensor verwendet wird, aus den Sensordaten ein wenigstens einen Teil des Kraftfahrzeugs und der Umgebung des Kraftfahrzeugs beschreibendes dreidimensionales Umgebungsmodell ermittelt wird und die Darstellung unter Verwendung des Umgebungsmodells erzeugt wird.

Die Idee der vorliegenden Erfindung ist es also, Umgebungssensoren zu verwenden, die als dreidimensionale Sensordaten die Umgebung in drei Raumdimensionen beschreibende Sensordaten aufnehmen. Das bedeutet, die Umgebungssensoren der vorliegenden Erfindung vermessen die Umgebung dreidimensional. Hieraus ergibt sich die Möglichkeit, nachdem die Eigenschaften, insbesondere die Außenform, des Kraftfahrzeugs selbstverständlich bekannt sind, ein dreidimensionales Umgebungsmodell zu ermitteln, welches eine verbesserte Grundlage zur Erzeugung der Darstellung bietet. Bei Verwendung geeigneter Umgebungssensoren ist es dabei möglich, ein auf Zentimeter genaues dreidimensionales Umgebungsmodell zu erzeugen, welches den Vorteil bietet, dass letztlich für die Darstellung nahezu jede Perspektive, mithin jede Blickrichtung, genutzt werden kann. Dabei wird es erfindungsgemäß bevorzugt, dass die Darstellung aus dem Umgebungsmodell durch Rendern ermittelt wird. Hierzu wird üblicherweise ein sogenannter Viewpoint gemeinsam mit der Blickrichtung definiert, so dass die Objekte und das Kraftfahrzeug aus dem dreidimensionalen Modell in eine zweidimensionale Darstellung übertragen werden können.

Durch die Verwendung von Umgebungssensoren, die die Umgebung in drei Raumdimensionen beschreibende Sensordaten liefern, ist also eine hochgenaue Abbildung der näheren Umgebung des Kraftfahrzeugs in dem dreidimensionalen Umgebungsmodell möglich, welches die Grundlage für eine Vielzahl möglicher Darstellungen bietet, die insbesondere, wie noch genauer dargelegt werden wird, situationsabhängig angepasst werden können. Der Fahrer erhält mithin mehr Informationen und kann damit verbessert in engen Bereichen rangieren und/oder wird beim Einparken nah an möglichen Objekten, beispielsweise eine Bebauung, verbessert unterstützt.

Besonders zweckmäßig ist es im Rahmen des erfindungsgemäßen Verfahrens, wenn als Umgebungssensor ein optischer bildgebender Sensor, insbesondere ein PMD-Sensor, verwendet wird. PMD-Sensoren (Fotomischdetektor) oder allgemeiner auf PMD-Sensoren basierende Time-Of-Flight-Kameras (TOF-Kameras) sind bildgebende optische Sensoren, deren Funktionsprinzip auf dem Lichtlaufzeitverfahren beruht. Dabei werden die Messobjekte mit Lichtimpulsen angeleuchtet und es wird die Signallaufzeit vermessen, aus der die Entfernung zwischen dem Umfeldsensor und dem Objekt errechnet werden kann. Zusätzlich liefern PMD-Sensoren auch ein optisches Bild der Umgebung, ordnen also mithin jedem Pixel auch eine Entfernungsinformation zu. Dies bietet eine hervorragende Grundlage zur Ermittlung des dreidimensionalen Umgebungsmodells.

Eine bevorzugte Weiterbildung sieht ferner vor, dass vier jeweils einer Seite des Kraftfahrzeugs zugeordnete Weitwinkel-Umgebungssensoren verwendet werden. Es sind mithin mit besonderem Vorteil Weitwinkel-PMD-Sensoren bzw. TOF-Kameras zu verwenden, von denen jeweils einer eine der vier Seiten des Kraftfahrzeugs weitgehend abdeckt. Beispielsweise kann der Erfassungsbereich solcher Weitwinkel-Umgebungssensoren einen Öffnungswinkel > 160°, bevorzugt > 170°, aufweisen. Derartige Kameras können beispielsweise frontseitig und heckseitig mittig angeordnet werden; für die Seiten des Kraftfahrzeugs bietet sich eine Anordnung an oder nahe vor Außenspiegeln an.

In besonders bevorzugter Ausgestaltung der Erfindung kann ein in der Darstellung anzuzeigender, durch das Umgebungsmodell beschriebener Anteil der Umgebung des Kraftfahrzeugs und/oder eine Blickrichtung auf den Anteil in Abhängigkeit einer Bewertung des Anteils im Hinblick auf eine Beschädigungsgefahr für das Kraftfahrzeug gewählt werden. In diesem Fall werden also die Sensordaten nicht nur dahingehend ausgewertet, ein dreidimensionales Umgebungsmodell zu schaffen, sondern auch, wo eine Beschädigungsgefahr für das Kraftfahrzeug vorliegen könnte. In Abhängigkeit dieser weiteren Bewertung ermöglicht es das dreidimensionale Umgebungsmodell, ständig auf die aktuelle Situation angepasst die Darstellung im gezeigten Anteil der Umgebung und der Blickrichtung so anzupassen, dass der Fahrer möglichst gut die aktuell kritische Situation einschätzen kann.

Allgemein gesagt kann also vorgesehen sein, dass für die im Umgebungsmodell enthaltenen Objekte unter Berücksichtigung von den aktuellen Betriebszustand des Kraftfahrzeugs beschreibenden Egodaten eine Kollisionsgefahr ermittelt und zur Bewertung herangezogen wird. Konzepte zur Ermittlung einer Kollisionsgefahr, meist beschrieben durch eine Kollisionswahrscheinlichkeit, sind im Stand der Technik bereits bekannt, und es kann beispielsweise der Anteil der Umgebung des Kraftfahrzeugs, der in der Darstellung gezeigt wird, derart gewählt werden, dass immer das Objekt betrachtet wird, dass die höchste Kollisionsgefahr, also die höchste Kollisionswahrscheinlichkeit, aufweist. Mithin wird die Darstellung bevorzugt immer wenigstens für den die aktuell höchste Beschädigungsgefahr darstellenden Anteil erzeugt und dargestellt.

In konkreter Ausgestaltung, die zudem vorteilhaft einfach zu realisieren ist, kann vorgesehen sein, dass zur Bewertung wenigstens ein kürzester Abstand des Kraftfahrzeugs zu einem Objekt in dem dreidimensionalen Modell und/oder wenigstens eine aktuelle Bewegungsrichtung des Kraftfahrzeugs ausgewertet werden. Mit der Bewegungsrichtung und dem kürzesten Abstand liegen einfach ermittelbare, dennoch jedoch nützliche Kriterien vor, die zumindest den anzuzeigenden Anteil deutlich bestimmen können. Ist das Objekt, welches den kürzesten Abstand aufweist und die Stelle bzw. der Bereich dieses kürzesten Abstands erst bekannt, ergibt sich ferner in den meisten Fällen auch eine optimale Blickrichtung, um dem Fahrer die größtmögliche Information zu bieten, worauf im Folgenden noch näher eingegangen werden wird.

Denn wie bereits erwähnt, erlaubt es die Verwendung des dreidimensionalen Umgebungsmodells, das auf den dreidimensionalen Sensordaten basiert, vorteilhaft, verschiedenste Perspektiven zu verwenden, um die Darstellung zu erzeugen, insbesondere zu rendern. Als besonders zweckmäßig hat es sich dabei erwiesen, wenn die Blickrichtung der Darstellung auf den in der Darstellung gezeigten Anteil der Umgebung des Kraftfahrzeugs entlang einer Linie verläuft, die in einer in einem Bereich kürzesten Abstands zu einem Objekt definierten, bevorzugt vertikalen Mittelebene zwischen dem Objekt und dem Kraftfahrzeug liegt. So wird letztlich insbesondere senkrecht auf den Abstand geschaut, so dass entsprechend eine gute Beurteilung des noch zur Verfügung stehenden Rangierraums gegeben ist. Mit besonderem Vorteil handelt es sich dabei um eine horizontale Linie, das heißt, die Blickrichtung kann in einem Bereich von +/- 20° um die Horizontale liegend gewählt werden, insbesondere vollständig horizontal. Auf diese Weise ist für den Fahrer also auch das seitliche Profil des Kraftfahrzeugs deutlich zu erkennen, so dass beispielsweise ein Überfahren oder ein Unterfahren eines Objekts besonders gut beurteilt werden kann.

Wird diese geschickte Wahl von Blickrichtungen mit der konkreten Beurteilung der aktuellen Situation des Kraftfahrzeugs kombiniert, werden also die Möglichkeiten des dreidimensionalen Umgebungsmodells ideal genutzt. Das heißt, das erfindungsgemäße Verfahren erlaubt es durchaus, wie heute grundsätzlich bekannt eine Ansicht von oben auf das Kraftfahrzeug zu realisieren (Topview), kann situationsabhängig jedoch bestimmte Anteile in bestimmten Blickrichtungen hervorheben, gegebenenfalls auch in einer zusätzlichen Darstellung. Fährt beispielsweise der Fahrer gerade an einen Bordstein heran, ist es äußerst interessant, eine Seitenansicht, insbesondere unter Verwendung einer horizontalen Blickrichtung, zu erhalten, um gleichzeitig den Abstand des Bordsteins vom Kraftfahrzeug und die Höhe des Bordsteins beurteilen zu können. Anhand der Fahrzeugumgebung, beschrieben durch das dreidimensionale Umgebungsmodell, und des Betriebszustands des Kraftfahrzeugs, beschrieben durch Egodaten, ist es mithin möglich, die für den Fahrer aktuell beste Perspektive im dreidimensionalen Raum zu bestimmen und automatisch in diese zu wechseln. Damit wird letztlich eine Art Verhalten eines guten Parkeinweisers realisierbar, der sich auch immer so positioniert, dass er den aktuell kritischen Punkt im Blick hat. Für den Viewpoint bei einer zu rendernden seitlichen Ansicht, insbesondere dessen Höhe, kann die Höhe gewählt werden, auf der in horizontaler Richtung der kürzeste Abstand zu dem Objekt im dargestellten Anteil vorliegt oder auch die Augenhöhe eines gedachten Beobachters, beispielsweise Einweisers.

Wie bereits erwähnt wurde, kann es im erfindungsgemäßen Verfahren äußerst zweckmäßig sein, mehr als eine Darstellung zu erzeugen. Beispielsweise kann eine Übersichtsdarstellung realisiert werden, beispielsweise eine Aufsicht von oben auf das Kraftfahrzeug, welche möglichst ortsgenau in der Umgebung des Kraftfahrzeugs befindliche, durch die Umgebungssensoren detektierte Objekte anzeigt. Eine zweite Darstellung kann eine ständig aufgrund einer Bewertung der aktuellen Situation aktualisierte Darstellung sein, die mit besonderem Vorteil seitliche Ansichten, also solche mit im Wesentlichen horizontaler Blickrichtung, beinhaltet, die den Anteil aktuell höchster Beschädigungsgefahr für das Kraftfahrzeug in einer Detaildarstellung für den Fahrer intuitiv und eingängig wiedergeben.

Neben dem Verfahren betrifft die Erfindung auch ein Kraftfahrzeug, umfassend ein Fahrerassistenzsystem zur Unterstützung eines Fahrers beim Rangieren und/oder Parken mit dem Kraftfahrzeug, aufweisend wenigstens einen dreidimensionale Sensordaten aufnehmenden Umgebungssensor, eine Anzeigeeinrichtung und eine zur Durchführung des erfindungsgemäßen Verfahrens ausgebildete Steuereinrichtung. Sämtliche Ausführungen bezüglich des erfindungsgemäßen Verfahrens lassen sich analog auf das erfindungsgemäße Kraftfahrzeug übertragen, mit welchen mithin ebenso die Vorteile der vorliegenden Erfindung erhalten werden können. Dabei wird es besonders bevorzugt, wenn die Umgebungssensoren als Weitwinkel-PMD-Sensoren ausgebildet sind.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: eine mögliche Übersichtsdarstellung, und
- Fig. 3: eine mögliche seitliche Darstellung eines besonders relevanten Anteils der Umgebung des Kraftfahrzeugs.

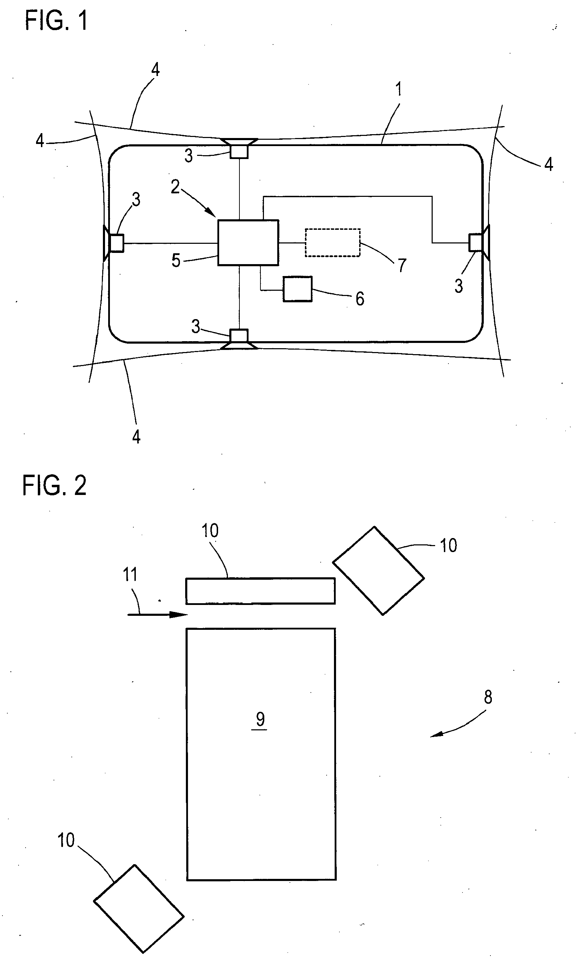

Fig. 1 zeigt in Form einer Prinzipskizze für die Erfindung relevante Komponenten eines erfindungsgemäßen Kraftfahrzeugs 1. Dieses umfasst ein Fahrerassistenzsystem 2, das den Fahrer beim Rangieren und Parken unterstützt. Hierfür weist das Kraftfahrzeugs 1 ferner vier dem Fahrerassistenzsystem 2 zugeordnete Umfeldsensoren 3 auf. Diese vermessen die Umgebung des Kraftfahrzeugs 1 dreidimensional, liefern also die Umgebung des Kraftfahrzeugs 1 dreidimensional beschreibende Sensordaten. Es handelt sich vorliegend um PMD-Sensoren, das bedeutet, die Umfeldsensoren 3 sind optische bildgebende Umgebungssensoren 3, bei denen zu jedem Pixel auch eine Entfernungsinformation, die nach dem Laufzeitverfahren gewonnen wurde, enthalten ist. Nachdem die Umgebungssensoren 3 auch eine Optik umfassen, die die Abdeckung eines äußerst weiten Winkels erlauben, wie durch die Erfassungsbereiche 4 angedeutet, ist es ausreichend, an jeder Seite des Kraftfahrzeugs 1 einen Umgebungssensor 3 anzuordnen, um den relevanten Anteil der Umgebung des Kraftfahrzeugs 1 erfassen zu können.

Die dreidimensionalen Sensordaten der Umgebungssensoren 3 werden der Steuereinrichtung 5 des Fahrerassistenzsystems 2 zugeführt, wo sie verarbeitet werden, um ein dreidimensionales Umgebungsmodell der Umgebung des Kraftfahrzeugs 1 zu ermitteln. Dieses wiederum wird verwendet, um eine den Fahrer beim Parken und Rangieren unterstützende Darstellung zu erzeugen, welche auf einer entsprechenden Anzeigevorrichtung 6 dargestellt werden kann. Die Steuereinrichtung 5 ist also zur Durchführung des erfindungsgemäßen Verfahrens ausgebildet.

Die Ermittlung der Darstellung kann durch Rendern erfolgen.

Für wenigstens eine erzeugte Darstellung des Fahrerassistenzsystems 2, hier eine immer aktuell gehaltene Darstellung, wird zur Erzeugung derselben eine Beurteilung der Gesamtsituation des Kraftfahrzeugs 1 vorgenommen, wozu die Steuereinrichtung 5 über ein übliches Bussystem mit weiteren, hier nur angedeuteten Fahrzeugsystemen 7 verbunden ist, von denen den Zustand des Kraftfahrzeugs 1 beschreibende Egodaten erhalten werden können, beispielsweise eine Bewegungsrichtung des Kraftfahrzeugs 1, die Geschwindigkeit und dergleichen.

Um eine aktuelle, für den Fahrer äußerst nützliche Darstellung zu erhalten, wird zunächst bewertet, wo aktuell die größte Kritikalität, mithin die größte Gefährdung für das Kraftfahrzeug, vorliegt. Hierzu können Kollisionswahrscheinlichkeiten mit den Objekten ermittelt werden, denkbar ist es aber auch, die Auswahl relevanter Objekte und somit des anzuzeigenden Anteils der Umgebung und/oder die Blickrichtung von der Fahrtrichtung des Kraftfahrzeugs 1 und den Abständen der einzelnen Objekte abhängig zu machen. Beispielsweise kann immer der kürzeste Abstand zu einem Objekt in Fahrtrichtung des Kraftfahrzeugs 1 betrachtet werden, wobei das zugehörige Objekt den Anteil der Umgebung definiert, der in der aktuellen Darstellung wiedergegeben werden soll. Die Blickrichtung ergibt sich ebenso aus situativen Kriterien, wobei bestimmte Zuordnungen getroffen werden können, beispielsweise in Look-Up-Tabellen. Zweckmäßig ist es in den meisten Fällen, eine Seitenansicht zu wählen, das bedeutet, eine Blickrichtung beim Vorgang des Renderns anzusetzen, die im Wesentlichen oder gänzlich horizontal verläuft, so dass auch das Profil des Kraftfahrzeugs 1 ersichtlich ist, beispielsweise um zu beurteilen, ob ein Objekt unterfahren oder überfahren werden kann. Allgemein gesagt wird bevorzugt eine im Wesentlichen horizontale Richtung innerhalb einer Mittelebene zwischen dem Kraftfahrzeug und dem Objekt gewählt, wobei die Mittelebene insbesondere vertikal verläuft.

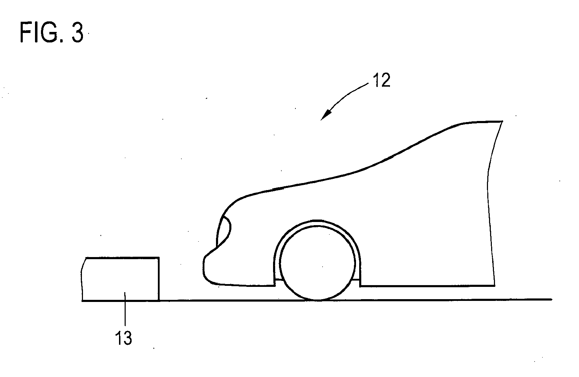

Im vorliegenden Fall werden durch das Fahrerassistenzsystem 2 verschiedene Darstellungen erzeugt, die in den Figuren 2 und 3 beispielhaft gezeigt sind. Fig. 2 zeigt eine grundsätzlich vorhandene und zur Verfügung gestellte Übersichtsdarstellung 8, die ein Abbild 9 des Kraftfahrzeugs 1 von oben zeigt. Gleichzeitig werden verschiedene Objekte 10 um das Kraftfahrzeug 1 herum entsprechend dem dreidimensionalen Umgebungsmodell dargestellt.

Die Übersichtsdarstellung 8 kann auch ein Darstellungselement 11 enthalten, welches andeutet, welche Ansicht gerade die in Fig. 3 für einen beispielhaften Fall gezeigte aktuelle Darstellung 12 wiedergibt. Vorwiegend zeigen die Bewegungsrichtung des Kraftfahrzeugs 1 und der kurze Abstand an, dass der interessanteste Bereich für den Fahrer des Kraftfahrzeugs 1 beim Rangieren als Objekt 10 ein Bordstein 13 ist. Daher wird aus dem dreidimensionalen Umgebungsmodell, welches ja auch das Kraftfahrzeug 1 selbst enthält, die aktuelle Darstellung 12 erzeugt, hier in einer seitlichen Ansicht, also entlang einer horizontalen Blickrichtung, was durch Rendern geschieht. Damit ist für den Fahrer nicht nur der Abstand des Kraftfahrzeugs 1 von dem Bordstein 13 deutlich zu erkennen, sondern auch die Höhe des Bordsteins 13, so dass er ideale Informationen erhält, um das Kraftfahrzeug 1 beschädigungsfrei rangieren zu können.

Dabei wird angemerkt, dass die aktuelle Darstellung 12 immer anhand der Fahrsituation aktuell gehalten wird, bedeutet, legt der Fahrer beispielsweise nun den Rückwärtsgang ein, ändert sich die Fahrtrichtung des Kraftfahrzeugs also, könnte das in Fig. 2 hinter dem Kraftfahrzeug 1 befindliche Objekt 10 relevanter sein, so dass eine entsprechende Ansicht gewählt wird, bevorzugt ebenso eine Seitenansicht mit im Wesentlichen horizontaler Blickrichtung. Durch die ständig aufrecht erhaltene Übersichtsdarstellung 8 ist dem Fahrer jedoch auch die Gesamtübersicht immer gegeben.

## Patentansprüche

1. Verfahren zum Betrieb eines Fahrerassistenzsystems (2) zur Unterstützung eines Fahrers beim Rangieren und/oder Parken mit einem Kraftfahrzeug (1), wobei das Fahrerassistenzsystem (2) unter Verwendung von Sensordaten wenigstens eines Umgebungssensors (3) wenigstens eine dem Fahrer auf einer Anzeigevorrichtung (6) anzuzeigende, wenigstens einen Teil des Kraftfahrzeugs (1) in Relation zu umgebenden Objekten (10) zeigende Darstellung (8, 12) erzeugt und darstellt,
**dadurch gekennzeichnet,**
**dass** als Umgebungssensor (3) wenigstens ein dreidimensionale Sensordaten aufnehmender Umgebungssensor (3) verwendet wird, aus den Sensordaten ein wenigstens einen Teil des Kraftfahrzeugs (1) und der Umgebung des Kraftfahrzeugs (1) beschreibendes dreidimensionales Umgebungsmodell ermittelt wird und die Darstellung (8, 12) unter Verwendung des Umgebungsmodells erzeugt wird.

2. Verfahren nach Anspruch 1,
**dadurch gekennzeichnet,**
**dass** als Umgebungssensor (3) ein optischer bildgebender Sensor, insbesondere ein PMD-Sensor, verwendet wird.

3. Verfahren nach Anspruch 1 oder 2,
**dadurch gekennzeichnet,**
**dass** vier jeweils einer Seite des Kraftfahrzeugs (1) zugeordnete Weitwinkel-Umgebungssensoren (3) verwendet werden.

4. Verfahren nach einem der vorangehenden Ansprüche,
**dadurch gekennzeichnet,**
**dass** ein in der Darstellung (12) anzuzeigender, durch das Umgebungsmodell beschriebener Anteil der Umgebung des Kraftfahrzeugs (1) und/oder eine Blickrichtung auf den Anteil in Abhängigkeit einer Bewertung des Anteils im Hinblick auf eine Beschädigungsgefahr für das Kraftfahrzeug (1) gewählt wird.

5. Verfahren nach Anspruch 4,
**dadurch gekennzeichnet,**
**dass** für die im Umgebungsmodell enthaltenen Objekte (10) unter Berücksichtigung von den aktuellen Betriebszustand des Kraftfahrzeugs (1) beschreibenden Egodaten eine Kollisionsgefahr ermittelt und zur Bewertung herangezogen wird.

6. Verfahren nach Anspruch 4 oder 5,
**dadurch gekennzeichnet,**
**dass** die Darstellung (12) immer wenigstens für den die aktuell höchste Beschädigungsgefahr darstellenden Anteil erzeugt und dargestellt wird.

7. Verfahren nach einem der Ansprüche 4 bis 6,
**dadurch gekennzeichnet,**
**dass** zur Bewertung wenigstens ein kürzester Abstand des Kraftfahrzeugs (1) zu einem Objekt (10) in dem dreidimensionalen Umgebungsmodell und/oder wenigstens eine aktuelle Bewegungsrichtung des Kraftfahrzeugs (1) ausgewertet werden.

8. Verfahren nach einem der vorangehenden Ansprüche,
**dadurch gekennzeichnet,**
**dass** die Blickrichtung der Darstellung (12) auf den in der Darstellung (12) gezeigten Anteil der Umgebung des Kraftfahrzeugs (1) entlang einer Linie verläuft, die in einer in einem Bereich kürzesten Abstands zu einem Objekt definierten, insbesondere vertikalen Mittelebene zwischen dem Objekt (10) und dem Kraftfahrzeug (1) liegt.

9. Verfahren nach Anspruch 8,
**dadurch gekennzeichnet,**
**dass** eine in einem Bereich von +/- 20° um die Horizontale liegende Blickrichtung, insbesondere eine horizontale Blickrichtung, gewählt wird.

10. Verfahren nach einem der vorangehenden Ansprüche,
**dadurch gekennzeichnet,**
**dass** die Darstellung (12) aus dem Umgebungsmodell durch Rendern ermittelt wird.

11. Kraftfahrzeug (1), umfassend ein Fahrerassistenzsystem (2) zur Unterstützung eines Fahrers beim Rangieren und/oder Parken mit dem Kraftfahrzeug (1), aufweisend wenigstens einen dreidimensionale Sensordaten aufnehmenden Umgebungssensor (3), eine Anzeigeeinrichtung (6) und eine zur Durchführung eines Verfahrens nach einem der vorangehenden Ansprüche ausgebildete Steuereinrichtung (5).
